Europäisches Patentamt

European Patent Office

Office européen des brevets

(11) Veröffentlichungsnummer: **0 142 680**
A2

## (12) EUROPÄISCHE PATENTANMELDUNG

(21) Anmeldenummer: **84111630.4**

(22) Anmeldetag: **28.09.84**

(51) Int. Cl.⁴: **G 05 D 23/275**
**G 01 K 5/08, H 01 H 35/36**

(30) Priorität: **19.10.83 DE 3337900**

(43) Veröffentlichungstag der Anmeldung:
**29.05.85** Patentblatt **85/22**

(84) Benannte Vertragsstaaten:
**AT CH DE FR GB IT LI SE**

(71) Anmelder: **E.G.O. Elektro-Geräte Blanc u. Fischer**
**Rote-Tor-Strasse Postfach 11 80**
**D-7519 Oberderdingen(DE)**

(72) Erfinder: **Knauss, Hermann**
**Sonnenhalde 6**
**D-7519 Oberderdingen(DE)**

(74) Vertreter: **Patentanwälte Ruff und Beier**
**Neckarstrasse 50**
**D-7000 Stuttgart 1(DE)**

(54) **Temperaturfühler.**

(57) Ein hydraulischer Ausdehnungs-Temperaturfühler ist durch spiral-, mäander- oder änliche Windung seines Fühlerrohres (6) mit so großer Oberfläche ausgestattet, daß er eine äußerst schnelle Reaktionszeit hat. Das Fühlerrohr (6) bildet dabei eine bauliche Einheit (1) mit einem flächigen Träger (5), der einerseits das Fühlerrohr (6) abschirmt und andererseits die zur Montage des Temperaturfühlers in einer Behälterwandung (20) erforderliche Öffnung (21) dicht verschließt.

Fig. 2

EP 0 142 680 A2

0142680

Anmelderin:                 E.G.O. Elektro-Geräte
                            Blanc u. Fischer
                            Rote-Tor-Straße

                            7519 Oberderdingen


                    Temperaturfühler
                    _____


Die Erfindung betrifft einen Temperaturfühler, der mit Ausdehnungsflüssigkeit gefüllt ist und über ein Kapillarrohr
mit einem Ausdehnungsglied eines Reglers verbunden ist,
für den Einbau in einen Fluid-Behälter, insbesondere in
eine Behälterwandung beispielsweise einer Friteuse.

Zum Messen von Flüssigkeitstemperaturen, insbesondere solchen, die über 100°Celsius liegen, sind in der Regel hydraulische Temperaturfühler wegen des geringeren technischen Aufwandes besser geeignet als elektrische bzw. elektronische Temperaturfühler. Beispielsweise ist es bekannt,
zum Messen der Flüssigkeitstemperatur ein gerades Fühlrohr,
das auch ummantelt sein kann, unmittelbar in die Flüssigkeit
ragen zu lassen. Bei einer anderen Anordnung ist statt des
Fühlrohres eine in die Flüssigkeit ragende Dose vorgesehen.
In jedem Fall ist bei den bekannten Fühlern nachteilig, daß
ihre Ansprech- bzw. Reaktionszeit im Hinblick auf Temperaturänderungen des zu messenden Mediums verhältnismäßig lang ist.

Insbesondere dort, wo starke Heizquellen zur Erhitzung des Mediums eingesetzt sind, kann diese Trägheit von beispielsweise 1 bis 2 Minuten große Schwierigkeiten, beispielsweise eine Überhitzung des in der Friteuse befindlichen Fettes, mit sich bringen, was einer Unbrauchbarmachung des zu erhitzenden Mediums gleichkommt; es ist daher bei den bekannten Ausbildungen erforderlich, die Heizleistung entsprechend niedrig zu halten, was jedoch eine der wirtschaftlichen Nutzung entgegenstehende erhöhte Trägheit des gesamten geregelten Systems mit sich bringt.

Der Erfindung liegt die Aufgabe zu Grunde, einen Temperaturfühler der genannten Art so auszubilden, daß bei einfachem Aufbau und leichter Montierbarkeit eine Verkürzung der Ansprech- bzw. Reaktionszeit erreicht wird.

Zur Lösung dieser Aufgabe ist ein Temperaturfühler der eingangs genannten Art erfindungsgemäß gekennzeichnet durch eine Baueinheit aus einem im wesentlichen flächigen Träger mit annähernd parallel zu seiner Fläche in mehrfach gewundener Anordnung angebrachtem Fühlerrohr. Dadurch kann die wirksame Oberfläche des Fühlerrohres beträchtlich bzw. nahezu beliebig vergrößert werden, was eine entsprechende Abnahme der Regeltragzeit mit sich bringt. Es hat sich gezeigt, daß z. B. bei einer Länge des Fühlerrohres von etwas mehr als 1 m und bei gewundener Anordnung dieses Fühlerrohres in einem Feld von etwa 65 mm Durchmesser, im flüssigen Fettmedium die Reaktionszeit des Reglers zwischen 5 und 10 Sekunden beträgt, was bei wesentlich geringerem technischen Aufwand und geringerer Störanfälligkeit etwa der Reaktionszeit eines elektronischen Fühlers gleichkommt. Es ist auch denkbar, das Fühlerrohr noch länger zu wählen und/oder so eng zu winden, daß es auf einem Feld mit noch

kleinerer Fläche angeordnet werden kann.

Die Montage des Temperaturfühlers wird wesentlich vereinfacht, wenn der Träger als Behälterwandung-Deckel
mit einem Befestigungsflansch ausgebildet ist, der vorzugsweise das Fühlerrohr-Feld am ganzen Umfang umgibt.
Dadurch kann der Temperaturfühler in einfacher Weise
als Deckel in eine entsprechende Öffnung in der zugehörigen Behälterwand eingesetzt und abgedichtet mit
dieser verbunden werden.

Zur geschützten Unterbringung des Fühlerrohres bei einfacher Ausbildung ist es vorteilhaft, wenn das Fühlerrohr in einem quer zur Trägerebene versenkten Fühlerrohr-Feld angeordnet ist, das vorzugsweise am gesamten
Umfang über eine Stufe in einen Trägerrand übergeht,
welcher insbesondere im wesentlichen in einer zum Fühlerrohr-Feld etwa parallelen Ebene liegt. Durch die Stufe
ist das Fühlerrohr auch gegen Beschädigungen von einer Peripherie her sicher abgeschirmt. Dies ist insbesondere
der Fall, wenn das Fühlerrohr gegenüber der Ebene des
Trägerrandes vollständig zurückversetzt angeordnet und
vorzugsweise mit geringem Abstand eng von einer Stufe umgeben ist.

Es ist zwar denkbar, das Fühlerrohr als integrierten,
nämlich beispielsweise einstückigen bzw. monolithischen
Bauteil mit dem Träger auszubilden, jedoch ergibt sich
eine besonderes einfache Herstellung und Montage, wenn
das Fühlerrohr als vom Träger gesonderter Bauteil ausgebildet ist, der an einer Oberfläche des Trägers, insbesondere im wesentlichen das gesamte Fühlerrohr-Feld
überdeckend angeordnet ist.

Nach einem weiteren Merkmal der Erfindung ist das Fühlerrohr für die vom Fluid umspülte Anordnung im Behälter annähernd über seine ganze Länge mit Abstand vom Träger, vorzugsweise unter Zwischenlage mindestens eines im wesentlichen nur stellenweise anliegenden, Distanzstückes an der
Trägerinnenseite befestigt.

Das durch Erhitzung aufsteigende Fluid wird durch das so
angeordnete Fühlerrohr, insbesondere wenn das Fühlerrohr
bzw. der Träger in einer aufrechten Ebene vorgesehen sind,
verwirbelt und somit durchmischt, wodurch die Genauigkeit
der Temperaturfühlung und -Regelung noch weiter verbessert
wird. Die Enden des Fühlerrohres sind in diesem Fall zweckmäßig abgedichtet durch Öffnungen im Träger an dessen Außenseite geführt, so daß sie vom Fluid nicht beaufschlagt sind.

Zusätzlich zur letztgenannten Ausführungsform, insbesondere
aber auch statt dessen, ist bei einer weiteren Ausführungsform das Fühlerrohr an der Außenseite des aus hoch wärmeleitfähigem Werkstoff bestehenden Trägers, vorzugsweise über
seine gesamte Länge, flächig an diesem anliegend, angeordnet
und z. B. durch Lötung befestigt. In diesem Fall wirkt der
das Fühlerrohr-Feld bildende, zweckmäßig sehr dünnwandig
ausgebildete Teil des Trägers als Temperatur-Membran, welche
ihrerseits unmittelbar dem Fluid ausgesetzt ist und die
Temperatur, die es durch die Beaufschlagung durch das Fluid
hat, auf kürzestem Wege an das Fühlerrohr weiterleitet. Durch
die Lötung, die nach Art einer Anlegierung bzw. einer Lötschweißung ausgeführt sein kann und in welche das Fühlerrohr zweckmäßig wenigstens teilweise eingebettet ist, ergeben sich große Wärmeleit-Querschnitte bzw. ein geringer Wärme-
leit-Widerstand, so daß auch in diesem Fall eine für viele
Anwendungszwecke hinreichend schnelle Reaktionszeit erzielt
werden kann.

Es hat sich als vorteilhaft erwiesen, benachbarte Windungen
des Fühlerrohres in einem Abstand von etwa dem ein- bis zweifachen des Durchmessers des Fühlerrohres voneinander liegend vorzusehen und den Abstand des Fühlerrohres vom Träger
etwa entsprechend diesem Maß zu wählen. Beide Merkmale
führen jeweils auch für sich einerseits zu einer guten Umspülung des Fühlerrohres und anderseits zu einer möglichst

0142680

kompakten gewundenen Anordnung, so daß bei großer Länge
des Fühlerrohres nur ein verhältnismäßig kleines Fühlerrohr-Feld benötigt wird. Es ist aber denkbar, die Windungen
des Fühlerrohres noch enger zu wählen.

Bei einer besonders vorteilhaften Ausführungsform ist das
Fühlerrohr-Feld, insbesondere der gesamte Träger, rund, vorzugsweise kreisförmig begrenzt, wodurch eine Minimierung
der Fläche des Fühlerrohr-Feldes erreicht werden kann. Das
Fühlerrohr-Feld kann aber auch andere geometrische Formen,
beispielsweise Rechteckform, Quadratform, Dreieckform, Ovalform oder ähnliche Form aufweisen. Insbesondere bei kreisförmiger Ausbildung des Fühlerrohr-Feldes ist es vorteilhaft, wenn auch das Fühlerrohr so gewunden ist, daß seine
Peripherie wenigstens annähernd mit einer Kreisform zusammenfällt. Unabhängig von der geometrischen Form dieser
Peripherie ist es zweckmäßig, das Fühlerrohr in einfach
spiralförmiger Anordnung vorzusehen, da dann im Verhältnis
zur Größe des Fühlerrohr-Feldes die größten Krümmungsradien
der Windungen vorgesehen werden können und die Belastung des
Fühlerrohres durch Biegung am geringsten ist. Es ist zwar
bekannt (vergleiche DE-OS 1 565 528 und DE-OS 1 565 529) ein
spiralförmig gewundenes Fühlerrohr an der Unterseite einer Kochplatte zum Zwecke von deren Temperaturregelung vorzusehen,
jedoch steht dieses Fühlerrohr nur teilweise in direkter Berührung mit dem zu messenden Stoff, nämlich dem Kochplattenkörper, und die Messung der Temperatur eines Feststoffes
wirft eine ganz andere Problematik auf, als die erfindungsgemäße Messung der Temperatur eines umwälzbaren Fluids.

Eine besonders flächenhafte bzw. flächige Ausbildung des
Temperaturfühlers ergibt sich, wenn alle Windungen des
Fühlerrohres in einer einzigen Ebene liegen. Insbesondere
in diesem Fall kann als Distanzstück in einfacher Weise
ein Stabkreuz oder dergl. vorgesehen sein, das z. B. aus Rohrabschnitten zusammengesetzt ist, welche aus dem gleichen
Rohr wie das Fühlerrohr gefertigt sind. Dieses Distanzstück
gewährleistet eine nahezu nur punktartige Lage des Fühlerrohres.

Die Erfindung wird im folgenden mit weiteren Einzelheiten
anhand der in den Zeichnungen dargestellten Ausführungsbeispielen näher erläutert.

Es sind dargestellt in

Fig. 1    ein  erfindungsgemäßer Temperaturfühler in Ansicht
          auf die Innenseite,

Fig. 2    der Temperaturfühler gemäß Figur 1 in teilweise
          geschnittener Draufsicht,

Fig. 3    eine weitere Ausführungsform eines Temperaturfühlers
          in einer Darstellung entsprechend Figur 2.

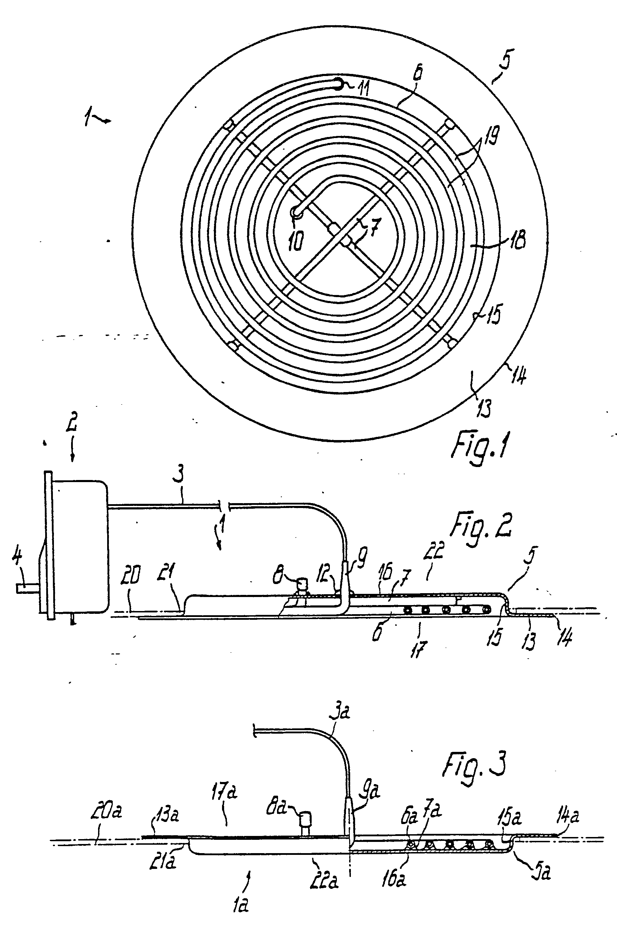

Wie die Figuren 1 und 2 zeigen, besteht ein erfindungsgemäßer Temperaturfühler im wesentlichen aus einer an der
Meßstelle zu montierenden Baueinheit 1 und einem mit dieser über ein Kapillarrohr 3 leitungsverbundenen Regler 2,
der beispielweise an geeigneter Stelle eines Armaturenfeldes anzubringen ist. Der Regler 2 weist beispielsweise
eine nicht näher dargestellte, an das zugehörige Ende
des Kapillarrohres 3 angeschlossene Ausdehnungsdose auf,
deren Ausdehnung elektrisch abgegriffen und zur Regelung
einer das zu messende Medium beaufschlagenden Heizquelle
herangezogen wird. Über eine Reglerwelle 4 kann dabei die
gewünschte Aufheiztemperatur eingestellt werden.

Die Baueinheit 1 besteht im wesentlichen aus einem flächigen, nahezu ebenen Träger 5 für die Montage der Baueinheit
1 und einem an diesem Träger 5 befestigten Fühlerrohr 6, das über ein Distanzstück 7 am Träger 5 angeordnet ist
und dessen Enden 8,9 durch Öffnungen 10,11 auf die vom
Hauptabschnitt des Fühlerrohres 6 abgekehrte Seite des
Trägers 5 geführt sowie in diesen Öffnungen 10,11 beispielsweise durch Lot 12 abgedichtet sind. Das eine Ende 8 des Fühlerrohres 6 ist beispielsweise durch Quetschung geschlossen, während das andere, verjüngte Ende
9 an das vom Regler 2 abgekehrte Ende des Kapillarrohres
3 angeschlossen ist, so daß sich ein hermetisch geschlossenes System für die Aufnahme von Ausdehnungsflüssigkeit
ergibt.

Der in Ansicht gemäß Figur 1 kreisförmige Träger 5 weist
einen ringförmigen Befestigungsflansch 13 auf, welcher
den äußersten Trägerrand 14 bildet. Innerhalb des Befestigungsflansches 13 befindet sich ein beispielsweise
durch Tiefziehen hergestellter, flachschalenartig nach
einer Seite versenkter Mittelbereich des Trägers 5,
der einstückig mit dem Befestigungsflansch 13, beispielsweise aus Blech gefertigt ist und im Querschnitt über
eine mantelförmige Stufe 15 in den Befestigungsflansch
13 übergeht. Die ebene, und zur Ebene des Befestigungsflansches 13 parallele, kreisscheibenförmige Bodenwand
16 des versenkten mittleren Abschnittes bildet an der Innenseite 17 des Trägers 5 ein Fühlerrohr-Feld 18, welches im
wesentlichen gleichmäßig von den Fühlerrohr 6 abgedeckt
ist. Unmittelbar auf der Innenfläche der Bodenwand 16 ist
das Distanzstück 7 in Form eines rechtwinkligen Stabkreuzes befestigt, dessen Enden wenigstens annähernd bis zur
Stufe 15 reichen. Mit einem der Querschnitthöhe des Distanzstückes 7 entsprechenden Abstand von der Innenseite der
Bodenwand 16 ist auf dem Distanzstück das Fühlerrohr 6 angeordnet und beispielsweise an jeder Kreuzungsstelle mit dem Distanzstück 7 durch Lötung oder dergl. verbunden, so daß sich eine sehr hohe mechanische Festigkeit des Fühlerrohres 6 trotz großer Länge ergibt. Das Fühlerrohr 6 ist spiralförmig in einer zur Ebene der Bodenwand 16 parallelen Ebene gewunden, derart, daß sein inneres Ende das geschlossene Ende 8 und sein äußeres Ende das an das Kapillarrohr 3 angeschlossene Ende 9 ist. Der Abstand zwischen benachbarten Windungen 19 beträgt dabei etwa das ein- bis zweifache des Durchmesser des Fühlerrohres 6; die äußerste Windung 19 nähert sich eng an die Stufe 15 an.

In Figur 2 ist strichpunktiert eine aufrechte bzw. vertikale Behälterwandung 20 angedeutet, an welcher der Bauteil 1 zu befestigen ist. Zur Befestigung weist die Wandung 20 eine Öffnung 21 auf, die nur geringfügig größer als der Außendurchmesser der Stufe 15 ist. In diese Öffnung wird der Bauteil 1 von der Innenseite der Wandung 20 her eingesetzt, derart, daß der Befestigungsflansch 13 an der Innenfläche der Wandung 20 ganzflächig dicht anliegt und mit geeigneten Mitteln befestigt werden kann. Die Außenseite 22 des Bauteiles 1 steht dort, wo sie durch das versenkte Mittelfeld gebildet ist, über die Außenseite der Behälterwandung 20 vor, während das Fühlerrohr 6 etwa in der Ebene der Behälterwandung 20 liegt und von dem im zugehörigen Behälter vorgesehenen Fluid umspült wird.

In Figur 3 sind für einander entsprechende Teile die gleichen Bezugszeichen wie in den Figuren 1 und 2, jedoch mit dem Index "a" verwendet. Wie Figur 3 zeigt, ist das Fühlerrohr 6a unmittelbar an der Innenfläche der Bodenwandung 16a anliegend vorgesehen und an dieser über seine gesamte Längsertreckung durchgehend beispielsweise durch Lötung 7a befestigt.

In diesem Fall kann daher der Abstand zwischen den Ebenen der Bodenwandung 16a und des Befestigungsflansches 13a noch kleiner gewählt werden. In diesem Fall wird der Bauteil 1 von der Außenseite der Behälterwandung 20a her montiert, derart, daß die Außenseite der Bodenwandung 16a in das Behälterinnere ragt und der Befestigungsflansch 13a an der Außenseite der Behälterwandung 20a anliegend befestigt ist. Die Enden 8a,9a des Fühlerrohres 6a sind von der Bodenwand 16a weggerichtet abgewinkelt, so daß sie den Träger 5a nicht durchsetzten. Bei der Ausführungsform gemäß Figur 3 wird somit das Fühlerrohr 6a nicht von dem Fluid umspült sondern von der Temperatur des Fluids durch die Bodenwandung 16a beaufschlagt, da die Außenseite 17a des Bauteiles 1a durch die das Fühlerrohr 6a aufnehmende Vertiefung gebildet ist.

Anmelderin:                    E.G.O. Elektro-Geräte
                               Blanc u. Fischer

                               Rote-Tor-Straße

                               7519 Oberderdingen


Temperaturfühler

Ansprüche


1. Temperaturfühler, der mit Ausdehnungsflüssigkeit gefüllt
   und über ein Kapillarrohr mit einem Ausdehnungsglied
   eines Reglers verbunden ist, für den Einbau in einen Fluid-
   Behälter, insbesondere in eine Behälterwandung beispielsweise einer Fritteuse,
   gekennzeichnet durch eine Baueinheit (1) aus einem im
   wesentlichen flächigen Träger (5) mit annähernd parallel
   zu seiner Fläche in mehrfach gewundener Anordnung angebrachtem Fühlerrohr (6).


2. Temperaturfühler nach Anspruch 1, dadurch gekennzeichnet,
   daß der Träger (5) als Behälterwandungs-Deckel mit einem Befestigungsflansch (13) ausgebildet ist, der vorzugsweise
   das Fühlerrohr-Feld am ganzen Umfang umgibt.

1/1

Fig.1

Fig.2

Fig.3